# EUROPEAN PATENT APPLICATION

(11) **EP 4 046 780 A1**
(43) Date of publication of application: **24.08.2022**
(21) Application number: 21157870.3
(22) Date of filing: 18.02.2021
(51) Int. Cl.: B29C 64/343, B29C 64/118, B33Y 10/00, B33Y 30/00

(54) **DEVICE AND METHOD FOR ADAPTING A SPEED OF PRINTING OF THREE-DIMENSIONAL OBJECTS**

(71) Applicant: InnovatiQ GmbH + Co KG, 85622 Feldkirchen (DE)
(72) Inventor: Höß, Benedikt, 85238 Petershausen (DE)
(74) Representative: Viering, Jentschura & Partner mbB Patent- und Rechtsanwälte

(57) **Abstract**

A device and a method for adapting a speed of printing of three-dimensional objects are provided. The device (100) includes a drive device (1) including at least a motor (2), which is configured to drive and transport a filament (3) with a current speed, a first detection device (4) configured to permanently detect a first speed value based on a current travelled absolute distance of the filament (3) at least in a first direction, and a controller (6) configured to receive a second rotational speed value of the motor (2) and to receive the first speed value from the first detection device (4) and to determine a control signal at least based on a difference between the first speed value and the second speed value and to automatically adapt and adjust at least the speed of the motor (2) based on the control signal.

## Description

Various examples relate generally to a device and a method for adapting a speed of printing of three-dimensional objects. Further, various examples relate to a system for printing a three-dimensional object in layers by fused filament fabrication.

Extrusion type additive manufacturing techniques may include, for example, fused filament fabrication (FFF) or fused deposition modeling (FDM) to make three-dimensional printing objects.

In a conventional FFF-device for printing of three-dimensional objects, printer control data may be provided, e.g. in gcode format, wherein gcode is the most widely used computer numerical control programming language. It is used mainly in computer-aided manufacturing to control automated machine tools.

When generating printer control data the final print speed or print velocity for printing of three-dimensional objects has to be specified manually by a user on a print device prior to starting the print job. The print speed is usually based and set on empirical knowledge base and is not adapted or adjusted to varying current printing factors but only slightly reduced by filament failure but not due to recognized quality improvement measures. A print speed may be set before starting a print job and the print speed is hold at a constant value from the beginning to the end of the print job.

In a conventional FFF-device for printing of three-dimensional objects, it is difficult to continuously detect slight or small slippage in the drive device for driving a print material, e.g., a filament, due to a speed, which is, e.g., too high for the present print situation.

In a conventional FFF-device the print speed is set based on experiments. In time-consuming experiments, a theoretical maximal print speed is determined based on a type of filament, a test printer and standardized print objects, whereby these values are combined with an empirical value, e.g., a practical value. The procedure has to be repeated as soon as one value or parameter has been changed, e.g., to maintain a printing accuracy. By way of example, a small deviation of the print objects may be accompanied by a complex and time-consuming procedure. In addition, a long-term slippage of a filament in a filament drive device may not be detected, which may end up in a distortion of the basic settings. Furthermore, a reaction on a changing current print condition is not provided in the past.

In a conventional FFF-device the optimal maximal print speed is not permanently determined while printing and is not permanently adjusted to current conditions. The user of the printing device may set the initial print speed wrong, e.g., the user may set the print speed far too low or far too high. This may end up in unsatisfying print results. Expensive testing using new print material, e.g. new filaments, may be necessary.

In various embodiments, a device and a method may set an optimal maximal print speed while a print process. An absolute distance travelled by a filament may be permanently and/or dynamically detected. A rotational speed of a motor, which drives the filament, may be permanently detected. The device and the method may be able to quickly react on print errors, e.g. missing filament, tracking error, a wrong print speed, which may be too high, a print speed, which may be too low, which may occur while a print process. The print speed may be determined while printing and adjusted at the printer using at least a controller. An optimal or ideal print speed corresponding to the present print settings in the printer may be dynamically set by at least one controller. Further, complex and time-consuming pretests, e.g. with new filament material, may be omitted. The device and method may continuously and dynamically detect and determine a slippage or a tracking error of a filament in the print device. An overall print speed may be increased and a print quality may be increased such that a print result may be optimized. A fine speed adaption depending on data from at least a sensor or a plurality of sensors is provided.

In various embodiments, a device is provided that may include a drive device having at least one motor. The motor may be an electro motor electrically coupled to a controller. The motor may be configured to drive and transport a filament with a current predetermined speed. A first detection device may be configured to permanently detect a first speed value based on a current travelled absolute distance of the filament at least in a first direction. The first speed value may be an analog signal or a digital signal and/or may be output by the first detection device in, e.g., impulses per second. The first detection device may be a sensor, e.g., a light sensor and a light detection device or a magnetic resonance sensor. A controller may be configured to receive a second rotational speed value of the motor and to receive the first speed value from the first detection device and to determine a control signal at least based on a difference between the first speed value and the second speed value and to automatically adapt/adjust at least the speed of the motor based on the control signal. The control signal may be, e.g., a voltage and/or a current and/or digital or analog. The control signal may be analog or digital. The controller may at least include a processor. The controller may be a programmable microcontroller.

In various embodiments, the term "permanently" used herein may mean, e.g., at least one of one time per second, two times per second, ten times per second, twenty times per second, 50 times per second, 100 times per second.

In various embodiments, the term "absolute" used herein may mean the real travelled distance, e.g. of a filament in a print device.

In various embodiments, the quality of the speed adaption/adjustment may be judged and readjusted based on the first detection device and the second detection device.

In various embodiments, a second detection device may be configured to permanently detect a second rotational speed value based on a current rotation speed of the motor. The second rotational speed value may be an analog or a digital signal and may be output by the second detection unit in, e.g., impulses per second. The second detection device may be an incremental encoder. The axis of the incremental encoder may be positioned and mounted on the drive shaft of the motor. A sensor, e.g., a light sensor and a light detection device or a magnetic resonance sensor, may be positioned adjacent to the incremental disc to detect rotation of the incremental disc. The controller may receive the second rotational speed value using a software. The software may be a software program or an algorithm, which is configured to determine a rotational speed of the motor from, e.g., control signals of the motor by a controller. The controller may receive the second rotational speed value from a second detection device. The first detection device may be independent from the second detection device. In other words, the measurement values detected by the first detection device may be detected independently from the measurement values detected by the second detection device. The detected speed values may be independently stored in a memory of a controller and may be retrievable independently. The device provides an independent surveillance of an effective travelled filament distance using an independent detection device.

The first detection device may be configured to permanently detect at least a value of the current speed of the filament in case the filament is transported in a second direction, which may be opposite to the first direction. In other words, the first detection device may also detect and/or determine an absolute distance and/or speed of the filament in case the filament is pulled back, e.g., pulled back by at least the motor in the print device for a predetermined time in a range from about 0,5 seconds to about 10 seconds, e.g., in a range from about 2 seconds to about 8 seconds, e.g., about 4, 5 or 6 seconds. The device is configured to detect the absolute distance of the filament even when the filament is pulled back by the motor. This may provide an optimized device for adapting a print speed.

The first detection device may include at least one incremental encoder. The incremental encoder may include at least one transmitter, e.g., light source, an encoder disc and a receiver, e.g. a light sensor. The transmitter and the receiver may be components of a sensor device. The encoder disc may be configured to be in contact with the filament and to roll on the filament, such that when the filament is driven and transported in the first direction by the drive device and/or the motor, the encoder disc may rotate in a direction depending on the first direction. In other words, in case the filament is transported in a first direction, the encoder disc may be driven by the filament and the encoder disc may rotate in a first direction, e.g. clockwise. Illustratively, in case the filament is transported in a second direction, the encoder disc may be driven by the filament and the encoder disc may rotate in a second direction, e.g. counterclockwise. The receiver, e.g. a light sensor, may detect at least a signal, e.g. a light, emitted by the transmitter, e.g. the light source, and may output at least a value depending on the transport speed of the filament.

The incremental encoder may be a linear or rotary electromechanical device that includes at least two output signals, which may issue pulses, respectively, when the encoder disc is moved. Together, the respective signals may indicate both the occurrence of and a direction of movement. The incremental encoder may further include an additional third output signal, which may indicate that the encoder disc may be located at a particular reference position. The incremental encoder may provide a status output, e.g. an alarm, that may indicate at least an internal fault condition, e.g., a sensor malfunction.

The encoder disc may include at least a first incremental disc and a second incremental disc. The first incremental disc may include at least a first incremental section. The second incremental disc may comprise at least a second incremental section. The first and second incremental sections may include different resolutions. The receiver may include a first receiver and a second receiver. The first receiver may detect the signal emitted by the transmitter through the first incremental section of the first incremental disc. The second receiver may detect the signal emitted by the transmitter through the second incremental section of the second incremental disc. The encoder disc may include at least a first incremental section and a second incremental section. The first and second incremental sections may include different resolutions. The first and second incremental sections may be positioned one after another, e.g., in a row along a central axis of a pulley. The receiver, e.g., a light sensor, may include a first receiver/sensor, e.g., a first light sensor, and a second receiver/sensor, e.g. a second light sensor. The first receiver may detect a signal emitted by the transmitter through the first incremental section. The second receiver may detect a signal emitted by the transmitter through the second incremental section.

The first incremental section may include a rough and highly exact detent. The second incremental section may include a fine and less exact detent. The controller may be configured to compare the detected signals from the first and second receivers.

After at least one rotation sequence to, e.g., three rotation sequences of the motor, the controller may adapt/adjust the rotation speed of the motor, e.g., an absolute rotation speed of the motor or an absolute distance travelled by a filament motor, based on at least a rotation sequence, e.g., one rotation sequence, of the encoder disc.

The first detection device may be configured to detect the amount of absolute filament movement in relation to an amount of counts of signals detected by the first detection device, e.g., by the receiver.

The incremental encoder may be a rotary photoelectric incremental encoder.

The incremental encoder may be a rotary magnetic incremental encoder.

A controller may be configured to check if a travelled absolute distance of a filament in a print device is proportional and/or in predetermined relation to a rotation speed of a motor of a drive unit.

The controller may be configured to generate at least a current dynamic threshold value based on at least one of the first and second speed values, and to compare the at least one current threshold value with at least a respective predetermined ideal value in a data pool.

A dynamic threshold value may be a mean value of consecutive measured absolute length of filament within the sensor signals to calibrate the mechanics of the printer as well as the behavior of the filament. On the other hand, a dynamic threshold value may also be the consecutive measured difference of the calculated deviations to the actual deviations to detect un upcoming print deviation.

The controller may be further configured to variably increase the rotational speed of the motor, e.g. by variably increasing a voltage applied to the motor, in case at least one of the current threshold values may be smaller than the respective ideal value, and/or to variably decrease the rotational speed of the motor, e.g., by variably decreasing a voltage applied to the motor, in case at least one of the current threshold values may be greater than the respective ideal value. The controller may be configured to hold the speed of the motor and/or the travelled absolute distance of a filament to a predetermined optimal speed value for the current situation. An ideal value may be, e.g., an optimal speed value, which matches with a current material of the filament used in the print device, a current contour of an object to be printed with the print device and/or a predetermined speed value in a data pool of the print device.

The ideal value may be an optimal maximal speed of the filament in relation to a current predetermined printing setting, and/or the at least one ideal value of the plurality of ideal values may be stored in a memory, e.g. in a data pool, e.g. in a memory of the device for adapting a speed of printing three-dimensional objects.

The controller may be configured to compensate at least a slip or tracking error in the transport of the filament based on the control signal. A slip may occur in case a rotation moment, generated by a driving device, e.g., a motor, and applied to the filament by at least a pulley in tractional contact with the filament, is not fully transmitted to a filament. In other words, the filament in a print device may not travel a predetermined distance which corresponds to a predetermined rotational degree of a driving motor in the print device. A filament tracking error or position error may occur in case the rotational moment of the motor may not fully be transmitted to the filament and the filament may not travel a corresponding predetermined distance, e.g. based on a clogging of a printer nozzle.

The controller may be configured to determine the control signal based on at least one of: a currently used print material, e.g., a smooth or stiff print material, a currently used print nozzle, e.g. a print nozzle having a small outlet or a nozzle having a large outlet, at least a characteristic of an object to be printed. The controller may determine the at least one characteristic of an object to be printed by receiving a predetermined corresponding data value stored, e.g., in a memory of the controller. The data value may be in relation to at least a characteristic of an object to printed. A characteristic of a plurality of characteristics of the object to be printed may be a current shape of the object to be printed. In other words, the controller determines if a portion and/or contour to be printed may include at least a straight line or a plurality of straight lines or at least a curve or a plurality of curves. Depending on the respective current contour to be printed, the controller may, e.g., dynamically, control at least a rotational speed of the motor of the drive device, e.g., by increasing or decreasing a voltage applied to the motor. By way of example, in case the controller determines that a straight line is to be printed, the controller increases the rotational speed of the motor and an absolute distance of the filament increases. In case the controller determines that a portion of at least a curved line or a plurality of curved lines is/are to be printed, the controller may be configured to decrease the rotational speed of the motor and an absolute distance of the filament decreases. The controller may receive corresponding data value, e.g., from data stored in a data pool. The device for adapting a speed of printing three-dimensional objects may provide an optimized printing setup. The device for adapting a speed of printing three-dimensional objects may adapt a print speed depending from a current print situation.

In various embodiments, the controller may be configured to dynamically adapt and adjust the control signal. The controller may be configured to adapt the control signal and/or the rotation speed of the motor in a range from about 1 % to 200 % of the original setup speed. In case the setup print speed is 4000 mm of laid down filament / min the controller can adapt the speed from 40 mm/min up to 8000 mm/min. The device for adapting a speed of printing three-dimensional objects may supersede expensive and time-consuming print tests for determining a common denominator print speed.

In various embodiments, the controller may be further configured to adapt the control signal to at least a higher printing speed of the device by increasing the speed of the motor, e.g., an electromotor, in case a current printing information stored in the controller and/or in a memory may include at least a straight printing section, a lower printing speed of the device by decreasing the speed of the motor in case the current printing information may include at least a printing section having at least a print section having an edge or a curve.

In various embodiments, the controller may be configured to determine at least a current speed value of a plurality of speed values of the motor in the drive device. The controller may be configured to determine at least a current speed value and/or an absolute distance value based on a travelled distance of a filament of a plurality of speed values and/or absolute distance values based on a travelled distance. The controller may be configured to determine at least a difference between the at least one current speed value of the motor and the current speed value or travelled distance value of the filament. The controller may be configured to compare the difference value with a predetermined value, e.g., in a memory. The controller may be configured to determine if the difference value falls within a predetermined value range. The controller may be configured to determine that no adaption of the speed of the motor has to be performed in case the difference value is in the predetermined value range or differ from an ideal value by, e.g., approximately null, two percent, five percent, or ten percent. The controller may be configured to determine that at least an adaption, e.g. increasing or decreasing, of at least one speed of the motor is performed in case the difference value is not in a predetermined value range.

The device may provide a slender adjustment having a high-resolution of the motor speed and/or the speed a filament is provided for printing a three-dimensional object. The device may reduce and prevent a long-term slippage in the filament transport, which provides an optimal print result.

In various embodiments, a system for printing a three-dimensional object in layers by fused filament fabrication is provided. The system for printing a three-dimensional object in layers by fused filament fabrication may include a device for adapting a speed of printing three-dimensional objects as described herein, a print bed, a filament reservoir, a print head, a first driving unit, a second driving unit, an energy supply device and a controller. The first driving unit may be configured to drive the print head in at least a x- and y-direction. The second driving unit may be configured to drive the print bed in at least a z-direction. The controller may be configured to control at least one of the device, the first driving unit and the second driving unit.

In various embodiments, a method for adapting a speed of printing of three-dimensional objects is provided. The method for adapting and adjusting a speed of printing of three-dimensional objects may include at least driving and transporting a filament with a current speed by a motor of a drive device, permanently detecting a first speed value based on a current travelled absolute distance of the filament in at least a first direction by a first detection device, permanently detecting a second rotational speed value based on a current rotation speed of the motor, e.g. using a software implementation or a program for a computer or by a second detection device, , receiving the first rotational speed value from the first detection device and receiving the second speed value from the second detection device by a controller, and determining a control signal at least based on a difference between the first speed value and the second speed value and to automatically adapt based on the control signal at least the speed of the motor by the controller.

In various embodiments, the driving and transporting includes driving the filament by at least a pulley coupled to a drive shaft of the motor and rolling off the filament on the pulley.

The permanent detecting of the first rotation speed may include generating a light impulse by a light source of an incremental encoder, detecting the light impulse through, e.g. a recess of, an encoder disc as an on-signal by a light sensor, depending on the rotation position of the encoder disc.

The permanent detecting of the second rotation speed may include generating a light impulse by a light source of an incremental encoder, detecting the light impulse through an encoder disc as an on-signal by a light sensor, depending on the rotation position of the encoder disc.

The receiving the first rotational speed value may further include transmitting the first rotation speed value from the first detection devise to a controller by a wired cable and/or wireless connection.

The receiving the second rotational speed value may further include transmitting the second rotation speed value from the second detection devise to a controller by a wired cable and/or wireless connection.

The determining may further include subtracting the first rotational speed value from the second rotational speed value or subtracting the second rotational speed value from the first rotational speed value and generating a control signal based on the subtraction.

The determining may further include generating of dynamic thresholds, e.g., from the first and second speed values.

The determining may further include comparing the dynamic threshold with predetermined values in a data pool.

The determining may further include comparing the actual speed values with the predetermined values in the data pool.

The determining may further include detecting a missing filament and/or in case of a missing filament requesting a user interaction.

The determining may further include in case of non-missing filament in a printer detecting a tacking error.

In various embodiments, in case of determining a tracking error the automatically adapting includes reducing a rotational speed of the motor.

The determining may further include detecting that a speed is too low and requesting a user interaction.

The determining may further include detecting that a speed is not too low and generating threshold values and displaying the actual speed value on at least a display of the device described herein.

The determining may further include in case of absence of a tracking error checking at least a corresponding value in the data pool.

In various embodiments, in case of determining of a presence of a corresponding value in the data pool indicating to a higher speed the automatically adapting further includes increasing at least a speed value and/or generating at least a threshold and/or displaying the actual speed value on at least a display of the device described herein.

In various embodiments, in case of determining absence of a corresponding value in the data pool indicating to a higher speed value generating at least a threshold and/or displaying the actual speed value on at least a display of the device described herein.

In various embodiments, the method further includes storing at least a speed value in a memory.

The adapting may further include dynamically adapting in the printing process.

The adapting may further include generating ideal speed values for at least an individual filament material, setting an individual speed value for at least a nozzle, at least a printing object.

The adapting may further include dynamically adapting a speed of the motor and/or the filament in the printing process.

The adapting may further include determining of straight lines in the printing process increasing the speed value of the motor and the overall printing speed.

In various embodiments, the adapting further includes determining of corners and/or curves in the printing process decreasing the speed value of the motor and the overall printing speed. The device may be configured to determine at least a straight print line and/or a curve print line based on adjacent print positions of a print head and/or a print bed.

Each feature of an embodiment may be combined with at least another feature of another embodiment disclose herein. Each effect described herein with respect to the device for adapting a speed of printing of three-dimensional objects may also refer to the method for adapting a speed of printing of three-dimensional objects and the system for printing a three-dimensional object in layers by fused filament fabrication and vice versa.

In the drawings, like reference characters generally refer to the same parts throughout the different views. The use of the same reference numbers in different figures indicates similar or identical items or features. The drawings are not necessarily to scale, emphasis instead generally being placed upon illustrating the principles of the invention.

In the following description, various examples of the invention are described with reference to the following drawings, in which:
FIG. 1 shows a device for adapting a speed of printing of three-dimensional objects in schematic views, according to various examples;
FIG. 2 shows a detection device for permanently detecting a first speed value based on a current travelled absolute distance of a filament at least in a first direction in a schematic view, according to various examples;
FIG. 3 shows a system for printing a three-dimensional object in layers by fused filament fabrication in schematic views, according to various examples;
FIG. 4 shows a flow chart of a method for adapting a print speed by a device described herein for adapting a speed of printing three-dimensional objects in schematic views, according to various examples; and
FIG. 5 shows a flow chart of another method for adapting a print speed by a device described herein for adapting a speed of printing three-dimensional objects.

The person skilled in the art will recognize that the examples are not limited to the examples or drawings described. It should be understood that the drawings and detailed description thereto are not intended to limit examples to the particular form disclosed, but to the contrary, the intention is to cover all modifications, equivalents and alternatives falling within the spirit and scope as defined by the appended claims. The headings used herein are for organizational purposes only and are not meant to be used to limit the scope of the description or the claims. As used throughout this application, the word "may" is used in a permissive sense (e.g., meaning having the potential to), rather than the mandatory sense (e.g., meaning must). Further, it is obvious, that each element of a list including a plurality of elements is also to be considered to be disclosed in combination with any further element of a further list.

The following detailed description refers to the accompanying drawings that show, by way of illustration, specific details and examples in which the invention may be practiced. These examples are described in sufficient detail to enable those skilled in the art to practice the invention. Other examples may be utilized and structural, logical, and electrical changes may be made without departing from the scope of the invention. The various examples are not necessarily mutually exclusive, as some examples can be combined with one or more other examples to form new examples. Various examples are described in connection with methods and various examples are described in connection with devices. However, it may be understood that examples described in connection with methods may similarly apply to the devices, and vice versa.

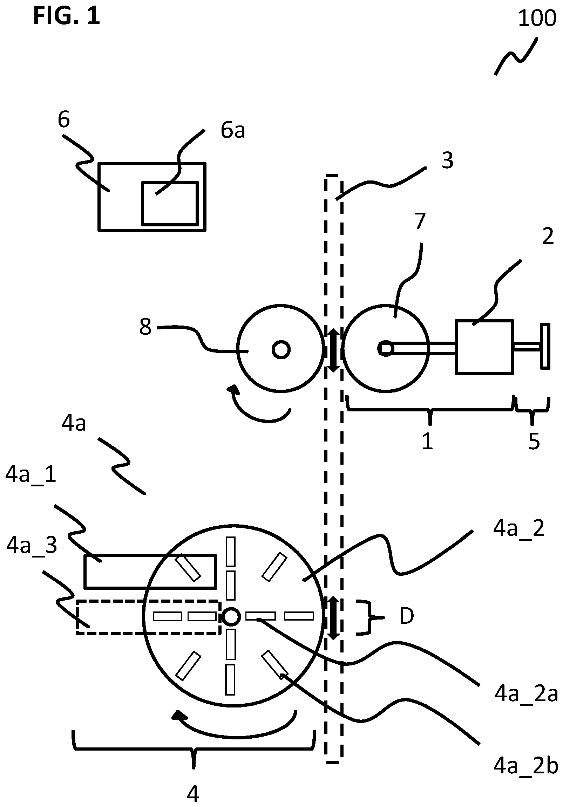

FIG. 1 shows a device 100 for adapting a speed of printing three-dimensional objects in a schematic view, according to various examples.

The device 100 for adapting a speed of printing three-dimensional objects may include a drive device 1 including at least a motor 2. The motor 2 may be configured to drive and transport at least a filament 3 with a current speed. The device 100 may include a first detection device 4 configured to permanently detect a first speed value based on a current travelled absolute distance of the filament 3 at least in a first direction. The controller may permanently detect and determine a second rotational speed value of a motor 2 using software. The controller 6 may be configured to receive the first and second rotational speed values and to determine a control signal at least based on a difference between the first speed value and the second speed value. According to various embodiments, the device 100 may include a second detection device 5 configured to permanently detect a second rotational speed value based on a current rotation speed of the motor 2. The device 100 may include a controller 6 configured to receive the second rotational speed value from the second detection device 5 and to receive the first speed value from the first detection device 4 and to determine a control signal at least based on a difference between the first speed value and the second speed value and to automatically adapt at least the speed of the motor 2 based on the control signal.

As schematically illustrated in FIG. 1, the drive device 1 may include the motor 2 having a drive shaft, on which at least a portion of the second detection device 5 is form-fittingly or force-fittingly mounted. The second detection device 5 may include an incremental encoder including a transmitter, e.g., a light source, an encoder disc and at least a receiver, e.g., light sensor of a plurality of light sensors. The light source may be configured to emit light to the encoder disc having a plurality of circumferential recesses through which the light emitted by the light source may be transmitted to the at least one light sensor. In other words, in case the motor is driven by a predetermined voltage, the light sensor generates at least an impulse signal in relation to the rotation speed of the motor. The driving shaft of the motor 2 may be form-fittingly or force-fittingly coupled to a first driving pulley 7, such that in case the motor 2 rotates the first driving pulley 7 also rotates. The first driving pulley 7 may be coupled to a filament 3 by a line pressure or area pressure. The device 100 may further include a second pulley 8, which may be a counter bearing to the first driving pulley 7. In other words, the filament 3 is transported between the first driving pulley 7 and the second pulley 8, as illustrated in FIG. 1. The motor 2 may transport the filament 3 in a first direction and in a second direction which is an opposite direction of the first direction.

The first detection device 4 may include at least an incremental encoder 4a, which may include at least a light source 4a_1, an encoder disc 4a_2 and a light sensor 4a_3. As an example, the light sensor 4a_3 is illustrated in dotted lines in FIG. 1, since the light sensor 4a_3 may be positioned behind the encoder disc 4a_2 when viewed from a side view. The encoder disc 4a_2 may be in contact with the filament 3 and may roll off the filament 3 in case the filament 3 is moving, such that in case the filament 3 is driven and transported in the first direction by the drive device 1, the encoder disc 4a_2 rotates in a direction depending on the first direction. The light sensor 4a_3 may detect at least light emitted by the light source 4a_1 and may output at least a value depending on the transport speed of the filament 3. The encoder disc 4a_2 may include a first incremental section 4a_2a and a second incremental section 4a_2b. The first incremental section includes a rough detent/resolution. The second incremental section includes a fine detent/resolution.

In various embodiments, in case the motor 2 rotates the filament 3 may travel an absolute distance D of the filament 3.

The controller 6 may include a memory 6a. The memory 6a may be configured to store or may store at least a dynamic threshold of a plurality of thresholds, ideal speed values in relation to a predetermined print condition, e.g., an ideal print speed, a print material, a characteristic of the current print process. The memory 6a may store data in a data pool. The memory 6a may be decentrally and/or peripherally arranged to the controller 6.

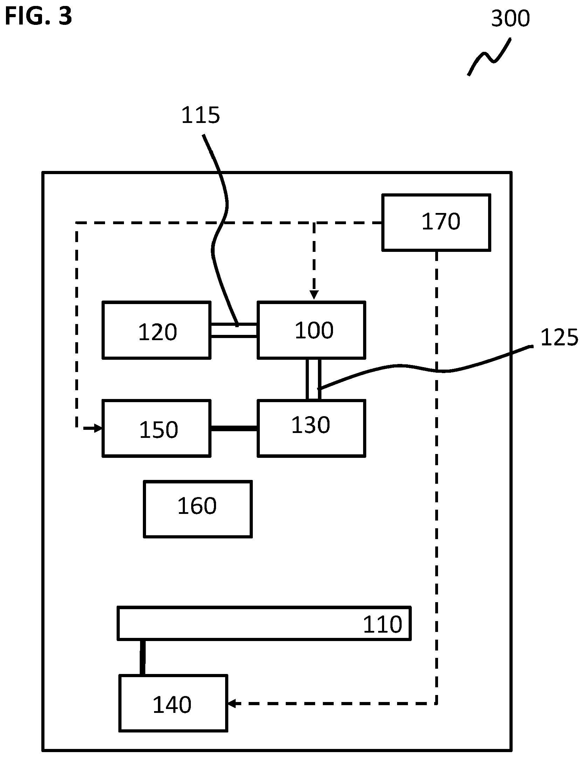

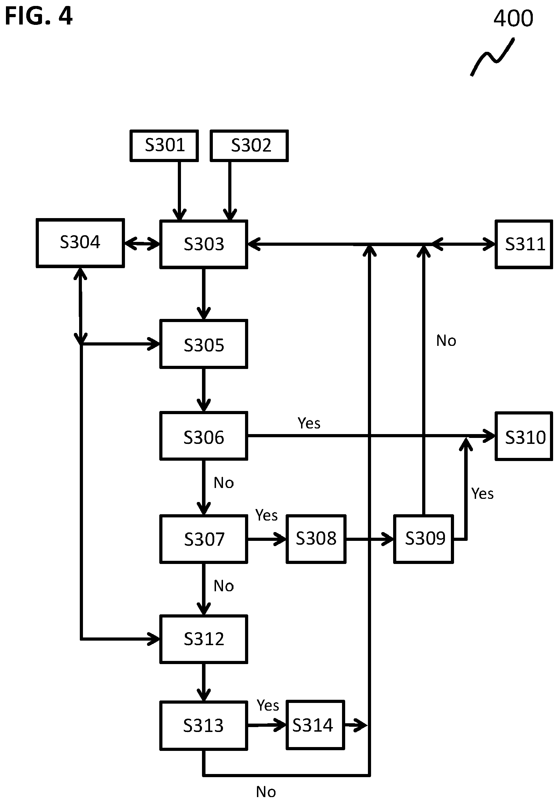

The controller 6 may be configured to execute at least the method for adapting a speed of printing three-dimensional objects described with reference to FIG. 3 and FIG. 4.

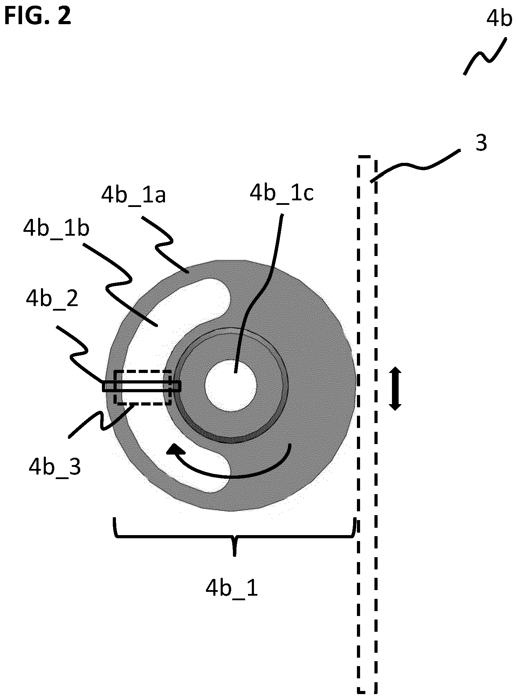

FIG. 2 shows a detection device 4b to permanently detect a first speed value based on a current travelled absolute distance of a filament 3 at least in a first direction in a schematic view, according to various examples.

In various embodiments, the detection device 4b may include an encoder disc 4b_1, a transmitter 4b_2 and a receiver 4b_3. The decoder disc 4b_1 may include a disc 4b_1a and a recess or gap or slot 4b_1b, as schematically illustrated in FIG. 2. The encoder disc 4b_1 may rotate around a rotation axis 4b_1c. The encoder disc 4b_1 may roll off the filament 3 in case the filament 3 is moved, e.g., by the drive motor 2. In case the filament 3 is moved in a first or second direction as indicated by the arrow in FIG. 2, the encoder disc 4b_1 is rotated depending on the movement of the filament 3. The device 100 may include a plurality of encoder discs 4b_1 and a plurality of pairs including a transmitter 4b_2 and a receiver 4b_3 to detect a movement and/or velocity of the filament 3. The transmitter 4b_2 may be a light source and the receiver 4b_3 may receive light emitted by the transmitter 4b_2. The encoder disc 4b_1 may be made of a metallic material, e.g., iron. The receiver 4b_3 may be a magnetic resonance sensor. The magnetic resonance sensor may measure impulses, which are generated in case the disc 4b_1 is rotating. Using at least one hall sensor next to a magnetic rotary encoder may alternatively be used to detect movement of the filament 3. At least two of the encoder discs 4b_1 may be used, which may be positioned one after another, e.g., on one common rotation axis, and which may have different resolutions. For example, a first encoder disc may have a high measurement resolution and a second encoder disc may have a lower measurement resolution, e.g., depending on a size or length of the respective recess 4b_1b.

FIG. 3 illustrates a system 300 for printing three-dimensional objects for transporting of a filament 3 in a schematic view, according to various examples.

The device 300 may include at least a device for adapting a speed of printing three-dimensional objects 100, or a plurality of devices 100 as described herein, a print bed 110, a first filament supply unit 115, a filament reservoir 120, a second filament supply unit 125, a print head 130, a first driving unit 150, configured to drive the print head 130 in at least a x- and y-direction, a second driving unit 140, configured to drive the print bed 110 in at least a z-direction, an energy supply device 160, and a control unit 170, configured to control at least one of the device 100, the first driving unit 150 and the second driving unit 140.

FIG. 4 schematically illustrates a flow chart 400 of a method for adapting a speed of printing of three-dimensional objects by the device for adapting a speed of printing three-dimensional objects in a schematic view, according to various examples.

The method may include driving and transporting a filament with a current speed by a motor of a drive device, permanently detecting a first speed value based on a current travelled absolute distance of the filament in at least a first direction by a first detection device, permanently detecting a second rotational speed value based on a current rotation speed of the motor, e.g., by software or by a second detection device, receiving the first rotational speed value from the first detection device and receiving the second speed value from the motor or from the second detection device by a controller, and determining a control signal at least based on a difference between the first speed value and the second speed value and automatically adapting based on the control signal at least the speed of the motor by the controller.

In various embodiments, the driving and transporting includes driving the filament by at least a pulley coupled to a drive shaft of the motor and rolling off the filament on the pulley. The permanent detecting of the first rotation speed includes generating a light impulse by a light source of an incremental encoder, detecting the light impulse through an encoder disc as an on-signal by a light sensor, depending on the rotation position of the encoder disc. The permanent detecting of the second rotation speed includes generating a light impulse by a light source of an incremental encoder, detecting the light impulse through an encoder disc as an on-signal by a light sensor, depending on the rotation position of the encoder disc. As schematically illustrated in FIG. 4, the receiving the first rotational speed value further includes transmitting the first rotation speed value from the first detection devise to a controller by a wired cable and/or wireless connection, in S401. The receiving the second rotational speed value may further include transmitting the second rotation speed value from the motor or from the second detection devise to a controller by a wired cable and/or wireless connection, in S402. The determining may further include subtracting the first rotational speed value from the second rotational speed value or subtracting the second rotational speed value from the first rotational speed value and generating a control signal based on the subtraction. The determining further includes generating of dynamic thresholds, in S403, of the detected speed values of the motor detected by software or by the second detection device and/or of the filament detected by the first detection device from, e.g., a filament tracking system. The determining further includes comparing at least one dynamic threshold with at least a predetermined value in a data pool or comparing a plurality of dynamic thresholds with a plurality of corresponding predetermined values in the data pool, in S404. In various embodiments, the data pool may be stored and/or actualized in the memory 6a of the controller 6. The determining further includes comparing at least an actual speed value with at least a predetermined value of a plurality of predetermined values in the data pool, in S405. The determining further includes detecting a missing filament, step S406, and/or in case of a missing filament, in S406: YES, requesting a user interaction, in S410. The determining further includes in case of non-missing filament in at least the device, S406: NO, detecting at least a tracking error, in S407. In case of determining a tracking error, S407: YES, the automatically adapting includes reducing at least a rotational speed of the motor, in S408. The determining further includes detecting that a speed is too low, S409: YES, and requesting a user interaction, in S410. The determining further includes detecting that a speed is not too low, S409: NO, and generating threshold values, in S403, and displaying the actual speed value on at least a display of the device described herein, in S411. The determining further includes in case of absence of a tracking error, S407: NO, checking at least a corresponding speed value in the data pool, in S412, and comparing the corresponding speed value with at least one of the current speed values. In case of determining of a presence of a corresponding speed value in the data pool indicating to a higher speed, S413: Yes, the automatically adapting further includes increasing at least a speed value of the motor, in S414, and/or generating at least a threshold, in S403, and/or displaying the actual speed value on at least a display of the device described herein, in S411. In case of determining absence of a corresponding value in the data pool indicating to a higher speed value, S413: NO, generating at least a threshold, S403, and/or displaying the actual speed value on at least a display of the device described herein, in S411. The method further includes storing at least a speed value in a memory, e.g., in a data pool. The adapting further includes dynamically adapting in the printing process. The adapting may further include generating ideal speed values for at least an individual filament material, setting an individual speed value for at least a nozzle, at least a print material, at least a printing object and/or updating at least a value in the memory, e.g., the data pool with a respective value. The adapting further includes dynamically adapting a speed of the motor and/or the filament in the printing process. The adapting further includes detecting and/or determining of straight lines in the printing process or printing program and increasing the speed value of the motor, the filament output amount, and the overall printing speed. The adapting further includes determining of at least a corner and/or a curve in the printing process or printing program and decreasing the speed value of the motor, the filament output amount, and the overall printing speed.

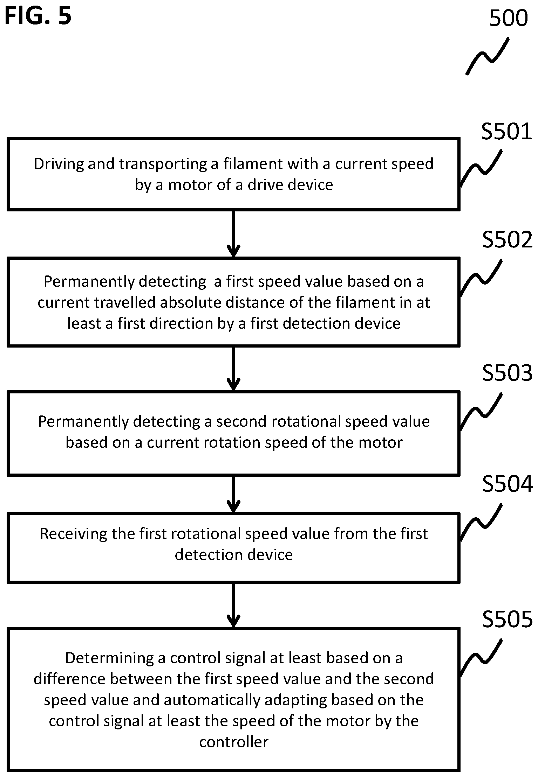

FIG. 5 illustrates a method 500 for adapting a speed of printing three-dimensional objects in a schematic view, according to various examples. The method 500 may be executed by the device for adapting a speed of printing three-dimensional objects described herein.

As schematically illustrated in FIG. 5, the method 500 includes driving and transporting a filament with a current speed by a motor of a drive device, in S501, permanently detecting a first speed value based on a current travelled absolute distance of the filament in at least a first direction by a first detection device, in S502, permanently detecting a second rotational speed value based on a current rotation speed of the motor, e.g., by software or by a second detection device, in S503, receiving the first rotational speed value from the first detection device, in S504, and determining a control signal at least based on a difference between the first speed value and the second speed value and automatically adapting and/or adjusting based on the control signal at least the speed of the motor by the controller, in S505.

The features mentioned above in conjunction with exemplary or specific examples may also be applied to further examples mentioned above and vice versa. Further, effects described in relation to the devices may also refer to the method and vice versa.

In the following, various examples are provided with reference to the FIG. 1 to FIG. 5 and examples described above.

Example 1 is a device for adapting a speed of printing three-dimensional objects, including: a drive device including at least a motor, a first detection device and a controller. The motor drives and transports a filament with a current speed. The first detection device is configured to permanently detect a first speed value based on a current travelled absolute distance of the filament at least in a first direction. The controller is configured to receive a second rotational speed value of the motor by software or to receive the second speed value from the second detection device and to determine a control signal at least based on a difference between the first speed value and the second speed value and to automatically adapt at least the speed of the motor based on the control signal.

In example 2, the device of example 1 may optionally include, that the controller receives the second rotational speed value using a software or a program for computers. Alternatively, the controller receives the second rotational speed value from a second detection device. The second detection device is independent from the first detection device.

In example 3, the device of any one of examples 1 or 2 may optionally include that the first detection device is configured to permanently detect the value of the current speed of the filament in case the filament is transported in a second direction, which is an opposite direction to the first direction.

In example 4, the device of any one of examples 1 to 3 may optionally include that the first detection device includes at least an incremental encoder. The incremental encoder includes at least a transmitter, e.g. a light source, an encoder disc and a receiver, e.g. a light sensor. The encoder disc is in contact with the filament and rolls on the filament, such that when the filament is driven and transported in the first direction by the drive device, the encoder disc rotates in a direction depending on the first direction. The receiver is configured to detect at least a signal, e.g. light, emitted by the transmitter and outputs at least a value depending on the transport speed of the filament.

In example 5, the device of example 4 may optionally include that the encoder disc includes a first incremental disc and a second incremental disc. The first incremental disc includes at least a first incremental section. The second incremental disc includes at least a second incremental section. The first and the second incremental sections include different resolutions. The receiver includes a first receiver and a second receiver. The first receiver detects the signal emitted by the transmitter through the first incremental section of the first incremental disc. The second receiver detects the signal emitted by the transmitter through the second incremental section of the second incremental disc. Alternatively, the encoder disc includes at least a first incremental section and a second incremental section. The first and second incremental sections include different resolutions. The receiver includes a first receiver and a second receiver. The first receiver detects a signal emitted by the transmitter through the first incremental section. The second receiver detects a signal emitted by the transmitter through the second incremental section.

In example 6, the device of example 5 may optionally include that the first incremental section includes a rough and highly exact detent. The second incremental section includes a fine and less exact detent. The controller is configured to compares the detected signals from the first and second receivers. Based on the at least two detents, the quality of the speed adaption may be judged and readjusted.

In example 7, the device of any one of examples 1 to 6 may optionally include that the controller is configured to generate at least a current dynamic threshold value based on at least one of the first and second speed values, and to compare the at least one current threshold value with at least a respective predetermined ideal value in a data pool.

In example 8, the device of example 7 may optionally include that the controller is configured to increase the rotational speed of the motor in case at least one of the current threshold values is smaller than the respective ideal value and/or decreases the rotational speed of the motor in case at least one of the current threshold values is greater than the respective ideal value.

In example 9, the device of any one of example 7 or 8 may optionally include that the ideal value is an optimal maximal speed of the filament in relation to a current predetermined printing setting, and/or the at least one value of the ideal values is stored in a memory.

In example 10, the device of any one of the examples 1 to 9 may optionally include that the controller is configured to compensate at least a slip or tracking error in the transport of the filament based on the control signal.

In example 11, the device of any one of the examples 1 to 10 may optionally include that the controller is configured to determine the control signal based on at least one of a currently used print material, a currently used print nozzle, and/or characteristics of an object to be printed.

In example 12, the device of any one of the examples 1 to 11 may optionally include that the controller is configured to dynamically adapt and adjust the control signal.

In example 13, the device of any one of the examples 1 to 12 may optionally include that the controller is configured to adapt the control signal to at least a higher printing speed of the device by increasing the speed of the motor in case a current printing information stored in the controller includes at least a straight printing section, a lower printing speed of the device by decreasing the speed of the motor in case the current printing information includes at least a printing section having at least an edge.

Example 14 is a system for printing a three-dimensional object in layers by fused filament fabrication, including a device of any one of the examples 1 to 13, a print bed, a filament reservoir, a print head, a first driving unit, a second driving unit, an energy supply device, a controller. The first driving unit is configured to drive the print head in at least a x- and y-direction. A second driving unit is configured to drive the print bed in at least a z-direction. The controller controls at least one of the device, the first driving unit and/or the second driving unit.

Example 15 is a method for adapting a speed of printing three-dimensional objects, including: driving and transporting a filament with a current speed by a motor of a drive device, permanently detecting a first speed value based on a current travelled absolute distance of the filament in at least a first direction by a first detection device, permanently detecting a second rotational speed value based on a current rotation speed of the motor, e.g. using a software program and/or by a second detection device, receiving the first rotational speed value from the first detection device and receiving the second speed value of the motor by a controller, determine a control signal at least based on a difference between the first speed value and the second speed value and automatically adapt based on the control signal at least the speed of the motor by the controller.

As used in this specification and claim(s), the words "comprising" (and any form of comprising, such as "include" and "includes"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

All of the devices and/or methods disclosed and claimed herein can be made and executed without undue experimentation in light of the present disclosure. While the devices and methods of this invention have been described in terms of embodiments, it will be apparent to those skilled in the art that variations may be applied to the compositions and/or methods and in the steps or in the sequence of steps of the method described herein without departing from the concept, spirit and scope of the invention. All such similar substitutes and modifications apparent to those skilled in the art are deemed to be within the spirit, scope and concept of the invention as defined by the appended claims.

It will be understood that particular embodiments described herein are shown by way of illustration and not as limitations of the invention. The principal features of this invention can be employed in various embodiments without departing from the scope of the invention. Those skilled in the art will recognize, or be able to ascertain using no more than routine experimentation, numerous equivalents to the specific procedures described herein. Such equivalents are considered to be within the scope of this invention and are covered by the claims.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

The phrase "at least one of" with regard to a group of elements (for example at least one of A and B, or in the same way, at least one of A or B) may be used herein to mean at least one element from the group consisting of the elements, i.e. the logical and/or. For example, the phrase "at least one of" with regard to a group of elements may be used herein to mean a selection of: one of the listed elements, a plurality of one of the listed elements, a plurality of individual listed elements, or a plurality of a multiple of listed elements. The term "coupled" is used herein to mean, for example, communicatively coupled, which may include type of a direct connection or an indirect connection. The connection may include any suitable wired connection and/or wireless connection.

A "controller" (or equivalently "processing circuitry" or "processing circuit") as used herein is understood as referring to any circuit that performs an operation(s) on signal(s), such as, for example, any circuit that performs processing on an electrical signal or an optical signal. A processing circuit may thus refer to any analog or digital circuitry that alters a characteristic or property of an electrical or optical signal, which may include analog and/or digital data. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (for example a processor or microprocessor). As utilized herein, "digital processing circuit(ry)" may refer to a circuit implemented using digital logic that performs processing on a signal, for example, an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single a processing circuit may be equivalently split into two separate processing circuits, and conversely that two separate processing circuits may be combined into a single equivalent processing circuit.

While the invention has been particularly shown and described with reference to specific examples, it should be understood by those skilled in the art that various changes in form and detail may be made therein without departing from the spirit and scope of the invention as defined by the appended claims. The scope of the invention is thus indicated by the appended claims and all changes, which come within the meaning and range of equivalency of the claims, are therefore intended to be embraced.

## Claims

1. A device for adapting a speed of printing three-dimensional objects, the device comprising:
a drive device (1) comprising at least a motor (2),
wherein the motor (2) is configured to drive and transport a filament (3) with a current speed;
a first detection device (4) configured to permanently detect a first speed value based on a current travelled absolute distance of the filament (3) at least in a first direction; and
a controller (6) configured to receive a second rotational speed value of the motor and to receive the first speed value from the first detection device (4) and to determine a control signal at least based on a difference between the first speed value and the second speed value and to automatically adapt at least the speed of the motor (2) based on the control signal.

2. The device of claim 1,
wherein the controller (6) is further configured to receive the second rotational speed value using a software, or
wherein the controller (6) is configured to receive the second rotational speed value from a second detection device (5), and
wherein the first detection device (4) is independent from the second detection device (5).

3. The device of any one of claims 1 or 2,
wherein the first detection device (4) is configured to permanently detect the value of the current speed of the filament (3) in case the filament (3) is transported in a second direction, which is an opposite direction to the first direction.

4. The device of any one of the foregoing claims,
wherein the first detection device (4) comprises at least an incremental encoder (4a),
wherein the incremental encoder (4a) comprises at least a transmitter (4a_1), an encoder disc (4a_2) and a receiver (4a_3),
wherein the encoder disc (4a_2) is configured to be in contact with the filament (3) and to roll on the filament (3), such that when the filament (3) is driven and transported in the first direction by the drive device (1), the encoder disc (4a_2) rotates in a direction depending on the first direction, and
wherein the receiver (4a_3) is configured to detect at least a signal emitted by the transmitter (4a_1) and to output at least a value depending on the transport speed of the filament (3).

5. The device of claim 4,
wherein the encoder disc (4a_2) comprises at least a first incremental disc and a second incremental disc,
wherein the first incremental disc comprises at least a first incremental section,
wherein the second incremental disc comprises at least a second incremental section,
wherein the first and the second incremental sections comprise different resolutions,
wherein the receiver (4a_3) comprises a first receiver and a second receiver,
and
wherein the first receiver detects the signal emitted by the transmitter (4a_1) through the first incremental section of the first incremental disc, and
wherein the second receiver detects the signal emitted by the transmitter (4a_1) through the second incremental section of the second incremental disc, or
wherein the encoder disc (4a_2) comprises at least a first incremental section (4a_2a) and a second incremental section (4a_2b),
wherein the first and second incremental sections (4a_2a, 4a_2b) comprise different resolutions, and
wherein the receiver (4a_3) comprises a first receiver and a second receiver, and
wherein the first receiver detects the signal emitted by the transmitter (4a_1) through the first incremental section (4a_2a), and
wherein the second receiver detects the signal emitted by the transmitter (4a_1) through the second incremental section (4a_2b).

6. The device of claim 5,
wherein the first incremental section (4a_2a) comprises a rough and highly exact detent,
wherein the second incremental section (4a_2b) comprises a fine and less exact detent, and
wherein the controller (6) is further configured to compare the detected signals from the first and second receivers.

7. The device of anyone of the foregoing claims,
wherein the controller (6) is configured to generate at least a current dynamic threshold value based on at least one of the first and second speed values, and to compare the at least one current threshold value with at least a respective predetermined ideal value in a data pool.

8. The device of claim 7,
wherein the controller (6) is further configured to increase the rotational speed of the motor (2) in case at least one of the current threshold values is smaller than the respective ideal value, and/or
wherein the controller (6) is further configured to decrease the rotational speed of the motor (2) in case at least one of the current threshold values is greater than the respective ideal value.

9. The device of claim 7 or 8,
wherein the ideal value is an optimal maximal speed of the filament (3) in relation to a current predetermined printing setting, and/or wherein the at least one value of the ideal values is stored in a memory (6a).

10. The device of any one of the foregoing claims,
wherein the controller (6) is configured to compensate at least a slip or tracking error in the transport of the filament (3) based on the control signal.

11. The device of any one of the foregoing claims,
wherein the controller (6) is configured to determine the control signal based on at least one of:
a currently used print material;
a currently used print nozzle; and
characteristics of an object to be printed.

12. The device of any one of the foregoing claims,
wherein the controller (6) is configured to dynamically adapt and adjust the control signal.

13. The device of any one of the foregoing claims,
wherein the controller (6) is further configured to adapt the control signal to at least
a higher printing speed of the device (100) by increasing the speed of the motor (2) in case a current printing information stored in the controller (6) comprises at least a straight printing section,
a lower printing speed of the device (100) by decreasing the speed of the motor (2) in case the current printing information comprises at least a printing section having at least an edge.

14. A system for printing a three-dimensional object in layers by fused filament fabrication, wherein the system (200) comprises:
a device (100) of anyone of the foregoing claims;
a print bed (110);
a filament reservoir (120);
a print head (130);
a first driving unit (140), configured to drive the print bed (110) in at least a x- and y-direction;
a second driving unit (150), configured to drive the print head (130) in at least a z-direction;
an energy supply device (160); and
a controller (170), configured to control at least one of the device (100), the first driving unit (140) and the second driving unit (150).

15. A method for adapting a speed of printing three-dimensional objects, the method comprising:
driving and transporting a filament with a current speed by a motor of a drive device;
permanently detecting a first speed value based on a current travelled absolute distance of the filament in at least a first direction by a first detection device;
permanently detecting a second rotational speed value based on a current rotation speed of the motor;
receiving the first speed value from the first detection device by a controller; and
determining a control signal at least based on a difference between the first speed value and the second speed value and automatically adapting based on the control signal at least the speed of the motor by the controller.
